# EUROPEAN PATENT SPECIFICATION

(11) **EP 3 939 447 B1**
(45) Date of publication and mention of the grant of the patent: **17.04.2024**
(21) Application number: 19946925.5
(22) Date of filing: 25.09.2019
(51) Int. Cl.: A24F 40/50, A24F 40/65, A24F 47/00

(54) **BATTERY UNIT, AEROSOL GENERATION DEVICE, INFORMATION PROCESSING METHOD, AND PROGRAM**
BATTERIEEINHEIT, AEROSOLERZEUGUNGSVORRICHTUNG, INFORMATIONSVERARBEITUNGSVERFAHREN UND PROGRAMM
UNITÉ DE BATTERIE, DISPOSITIF DE GÉNÉRATION D'AÉROSOL, PROCÉDÉ DE TRAITEMENT D'INFORMATIONS ET PROGRAMME

(43) Date of publication of application: 19.01.2022
(73) Proprietor: Japan Tobacco Inc., Tokyo 105-6927 (JP)
(72) Inventor: ONO, Yasuhiro, Tokyo 130-8603 (JP)
(74) Representative: Hoffmann Eitle
(86) International application number: PCT/JP2019/037525
(87) International publication number: WO 2021/059383

(56) References cited:
- JP-A- 2018 533 925
- KR-A- 20180 114 825
- US-A1- 2018 280 640

## Description

### TECHNICAL FIELD

The present invention relates to a battery unit, an aerosol generating device, an information processing method, and a program.

### BACKGROUND ART

WO 2018/020402 A1 discloses a technique for controlling an information communication process between an electronic tobacco and a charger connected to the electronic tobacco according to a state of the electronic tobacco. When the electronic tobacco is in a communication mode, information is communicated between the electronic tobacco and the charger, however, when the electronic tobacco is in a sleep mode, the information is not communicated between the electronic tobacco and the charger.

US 2018/0280640 A1 relates to an e-cigarette with a heater, a communications interface and a processor, wherein the processor may prevent wireless communications when the heater is being used for vaporizing liquid from the reservoir; specifically, since the heater may also be utilized as an antenna for use by the communications interface.

### SUMMARY OF THE INVENTION

### PROBLEMS TO BE SOLVED BY THE INVENTION

In a conventional electronic tobacco as described in WO 2018/020402 A1, there is a demand for miniaturization of its main body. Therefore, since a size of a battery included in the electronic tobacco is limited, capacity of the battery is also limited. Also, in US 2018/0280640 A1, there is a problem that the wireless communications cannot take place when the heater is being used for vaporizing liquid from the reservoir.

In the conventional electronic tobacco, short-range wireless communication such as Bluetooth [registered trademark] or BLE (Bluetooth Low Energy) communication may be performed with other devices. Performance of such short-range wireless communication increases power consumption of the electronic tobacco and also increases battery consumption. Therefore, there is a possibility that a battery remaining amount sufficient for a user to perform a puff action of inhaling aerosol using the electronic tobacco cannot be maintained. Moreover, in the conventional electronic tobacco, since heating by an electronic tobacco heater and the short-range wireless communication can be performed at the same time, current load increases. This may increase a battery load due to a large current generated during heating of the heater.

Accordingly, some aspects of the present invention have been made in view of such circumstances, and an object of the present invention is to provide a technology capable of reducing consumption of the battery included in the aerosol generating device that generates an aerosol, and reducing the battery load due to the large current that may be generated in the aerosol generating device.

### SOLUTION TO THE PROBLEMS

A battery unit according to claim 1 solves the above problems. The dependent claims describe further preferred embodiments, and this description exemplifies how the present invention may be carried out. Accordingly, one aspect of the present invention is a battery unit for an aerosol generating device that generates an aerosol, including: a communication unit that performs wireless communication between the aerosol generating device and a user terminal; and a wireless communication controller that restricts the communication unit from transmitting information to the user terminal when the aerosol generating device is in a predetermined state.

The aerosol generating device according to one aspect of the present invention includes: an aerosol generating device that generates an aerosol from an aerosol source or a smoking article; a battery unit for an aerosol generating device that generates an aerosol; a communication unit that performs wireless communication between the aerosol generating device and a user terminal; and a wireless communication controller that restricts the communication unit from transmitting information to the user terminal when the aerosol generating device is in a predetermined state.

An information processing method according to one aspect of the present invention is performed by an aerosol generating device that generates an aerosol, the method including: a step of performing wireless communication between the aerosol generating device and a user terminal; and a step of restricting transmission of information to the user terminal when the aerosol generating device is in a predetermined state.

A program according to one aspect of the present invention implements, on a computer, a communication unit that performs wireless communication between an aerosol generating device that generates an aerosol and a user terminal, and a wireless communication controller that restricts the communication unit from transmitting information to the user terminal when the aerosol generating device is in a predetermined state.

According to the aspects, when the aerosol generating device is in a predetermined state, information transmission to the user terminal that is performed between the aerosol generating device and the user terminal is restricted. Therefore, since an increase in power consumption of the aerosol generating device can be suppressed, consumption of the battery included in the aerosol generating device can be reduced. Further, for example, heating of the heater of the electronic tobacco and information transmission process are exclusively controlled, so that the current load is distributed. Thus, it is possible to reduce the battery load due to the large current generated during heating of the heater.

A battery unit according to one aspect of the present invention is a battery unit for an aerosol generating device that generates an aerosol, including: a communication unit that performs wireless communication between the aerosol generating device and a user terminal; a heater controller that controls a heating state of a heater for atomizing an aerosol source; and a wireless communication controller that controls the wireless communication during heating of the heater. During heating of the heater, when the communication unit receives from the user terminal an authentication connection request that is a process of establishing a communication connection between the aerosol generating device and the user terminal, the wireless communication controller controls not to establish the authentication connection, or the heater controller stops heating of the heater until the authentication connection is completed.

An information processing method according to an aspect of the present invention is the information processing method performed by an aerosol generating device that generates an aerosol, including: a step of performing wireless communication between the aerosol generating device and a user terminal; a step of controlling a heating state of a heater for atomizing an aerosol source; and a step of controlling the wireless communication during heating of the heater. During heating of the heater, when receiving an authentication connection request that is a process of establishing a communication connection between the aerosol generating device and the user terminal from the user terminal, the step of controlling the wireless communication controls not to establish the authentication connection, or the step of controlling the heating state stops heating of the heater until the authentication connection is completed.

A program according to an aspect of the present invention is the program that implements on a computer a communication unit that performs wireless communication between an aerosol generating device that generates an aerosol and a user terminal, a heater controller that controls a heating state of a heater for atomizing an aerosol source, and a wireless communication controller that controls the wireless communication during heating of the heater. During heating of the heater, when the communication unit receives from the user terminal an authentication connection request that is a process of establishing a communication connection between the aerosol generating device and the user terminal, the wireless communication controller controls not to establish the authentication connection, or the heater controller stops heating of the heater until the authentication connection is completed.

According to these aspects, during heating of the heater, when the communication unit receives from the user terminal an authentication connection request that is a process of establishing a communication connection between the aerosol generating device and the user terminal, the wireless communication controller controls not to establish the authentication connection, or the heater controller stops heating of the heater until the authentication connection is completed. Therefore, while the user is performing the puff action of inhaling the aerosol using the aerosol generating device, the authentication connection between the aerosol generating device and the user terminal is controlled not to establish, or heating of the heater is stopped until the authentication connection is completed. Therefore, since heating of the heater and the authentication connection are exclusively controlled, the current load is distributed. Thus, it is possible to reduce the battery load due to the large current generated during heating of the heater. Further, even if abnormality such as overheating of the heater occurs, it is possible to prevent the authentication connection from being forcibly terminated at an unexpected timing.

In the present invention, "unit" and "device" do not simply mean physical means, but also include cases where functions of the "unit" and "device" are implemented by software. Further, the functions of one "unit" or "device" may be implemented by two or more physical means or devices, and the functions of two or more "units" or "devices" may be implemented by one physical means or device.

### EFFECTS OF THE INVENTION

According to the present invention, consumption of the battery included in the aerosol generating device can be reduced.

### BRIEF DESCRIPTION OF THE DRAWINGS

Fig. 1 is a schematic configuration diagram of an information processing system according to an embodiment of the present invention.
Fig. 2A is a block diagram of a schematic configuration of a flavor inhaler according to the embodiment of the present invention.
Fig. 2B is a view showing an example of a schematic appearance of the flavor inhaler according to the embodiment of the present invention.
Fig. 3 is a block diagram showing a schematic configuration of the flavor inhaler according to the embodiment of the present invention.
Fig. 4 is a block diagram showing another schematic configuration of the flavor inhaler according to the embodiment of the present invention.
Fig. 5 is a view showing another example of the schematic appearance of the flavor inhaler according to the embodiment of the present invention.
Fig. 6 is another example of the schematic appearance of the flavor inhaler holding an aerosol-generating base material according to the embodiment of the present invention.
Fig. 7 is a block diagram of a schematic configuration of a user terminal according to the embodiment of the present invention.
Fig. 8 is a schematic configuration diagram showing an example of a functional configuration of a controller according to the embodiment of the present invention.
Fig. 9 is a flowchart showing an example of a wireless communication control process according to a first embodiment of the present invention.
Fig. 10 is a flowchart showing an example of the wireless communication control process according to a second embodiment of the present invention.
Fig. 11 is a flowchart showing an example of the wireless communication control process according to a third embodiment of the present invention.
Fig. 12 is a flowchart showing an example of the wireless communication control process according to a fourth embodiment of the present invention.
Fig. 13 is a flowchart showing an example of the wireless communication control process according to a fifth embodiment of the present invention.
Fig. 14 is a diagram showing an example of a hardware configuration of a computer according to the embodiment of the present invention.

### DESCRIPTION OF THE EMBODIMENTS

Hereinafter, embodiments of the present invention will be described with reference to the accompanying drawings. The following embodiments are exemplifications for explaining the present invention, and are not intended to limit the present invention only to the embodiments. The present invention can be variously modified without departing from the gist thereof. Further, in each drawing, the same components are denoted by the same reference numerals as much as possible, and redundant description will be omitted.

### [Configuration of information processing system]

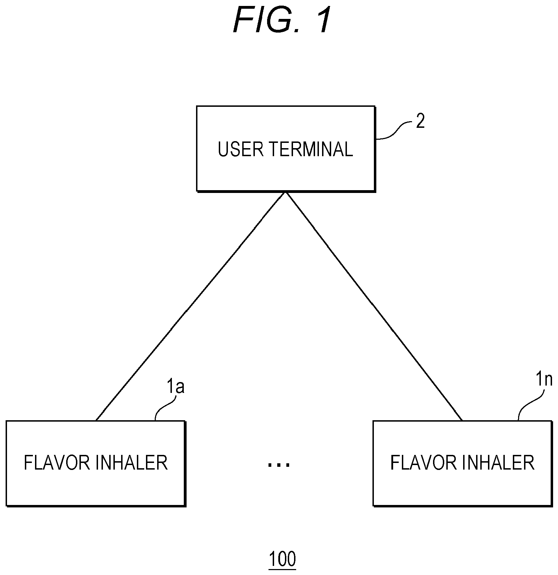

Fig. 1 is a schematic configuration diagram (system configuration diagram) of an information processing system according to the present embodiment of the present invention. As shown in Fig. 1, an information processing system 100 exemplarily includes n flavor inhalers 1 (n is an arbitrary integer value of 1 or more) and a user terminal 2 capable of communicating with them.

The "flavor inhaler 1" is a device for inhaling a flavor, and is not limited thereto, but is for example intended for electronic tobaccos, heated tobaccos, and conventional tobaccos. Further, the flavor inhaler 1 may be an aerosol generating device for generating an aerosol and inhaling the generated aerosol. An action of inhaling the aerosol is called "puff action", and the number of puff actions is called "puff number". The aerosol generating device is, for example, intended for the electronic tobaccos, the heated tobaccos, and medical nebulizers. More specifically, the aerosol generating device is, for example, a device that generates the aerosol by atomizing a liquid (an aerosol source) using electric power. The aerosol is obtained by atomizing the aerosol source and is particles that are fine enough to float in a gas. The aerosol generated by the aerosol generating device may be accompanied by a flavor. Examples of the aerosol generating device include the heated tobaccos and the electronic tobaccos. The aerosol generating device includes a type that directly heats the tobacco (direct heating), a type that indirectly heats the tobacco (indirect heating), and a type that heats the liquid. Further, the aerosol generating device may atomize the liquid by generating SAW (Surface Acoustic Wave) using a piezoelectric element substrate having a comb-shaped electrode pair. In the drawing, a flavor inhaler 1a and a flavor inhaler 1n are shown as the n flavor inhalers. However, in the following description, when the n flavor inhalers are described without being distinguished, a part of the reference numerals are omitted and the n flavor inhalers are simply referred to as "flavor inhalers 1".

The user terminal 2 is implemented by, for example, a smartphone, a game machine, or a personal computer. Although one user terminal 2 is shown in the drawing, the present invention is not limited to this, and the information processing system 100 may include a plurality of user terminals 2.

The flavor inhaler 1 and the user terminal 2 are associated with each other and communicate with each other (including wireless communication). For example, the flavor inhaler 1 and the user terminal 2 can transmit and receive information between the two by performing short-range wireless communication such as Bluetooth or BLE (Bluetooth Low Energy) communication. Transmission and reception of the information between the flavor inhaler 1 and the user terminal 2 is not limited to BLE communication, but may be performed by any communication such as Wi-Fi [registered trademark], LPWAN (Low Power Wide Area Network) and NFC (Near Field Communication). Further, the transmission and reception of the information between the flavor inhaler 1 and the user terminal 2 is not necessarily limited to the wireless communication, but may be wired communication such as USB (Universal Serial Bus), Mini USB, Micro USB, and Lightning.

Hereinafter, the flavor inhaler 1 and the user terminal 2 included in the information processing system 100 will be described in detail.

### [Configuration of flavor inhaler]

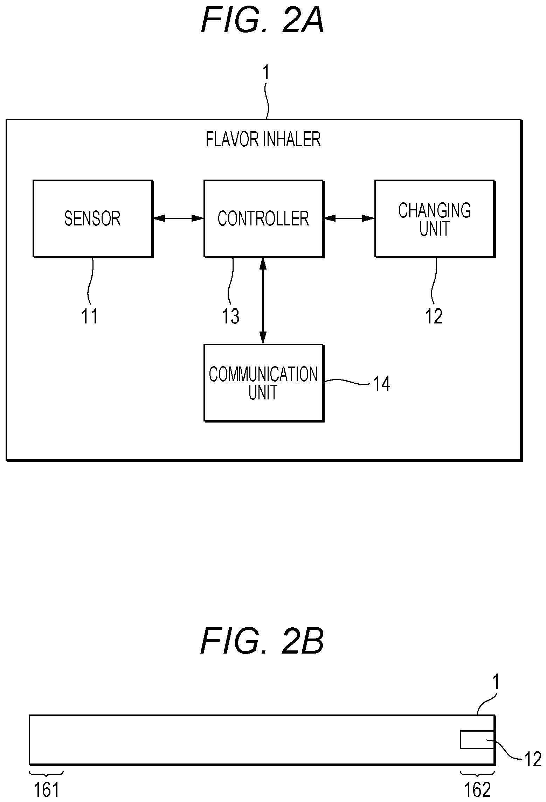

Fig. 2A is a block diagram of a schematic configuration of the flavor inhaler according to the embodiment of the present invention. Not that Fig. 2A schematically and conceptually shows each component included in the flavor inhaler 1 and does not show an exact arrangement, shape, dimension, positional relationship and the like of each component and the flavor inhaler 1. It should also be noted that the flavor inhaler 1 may include components such as tobacco capsules and liquid cartridges not shown in Fig. 2A.

A sensor 11 is, for example, the sensor for detecting the information on inhalation by a user. The sensor 11 may be any type of sensor such as a flow amount sensor, a flow rate sensor, or a pressure sensor for detecting the information on inhalation by the user. The sensor 11 may be a button that the user presses to perform inhalation. The sensor 11 may be, for example, an inhalation sensor and may detect inhalation of the flavor inhaler 1 by the user. The sensor 11 may be an airflow sensor and may detect an airflow generated by inhalation by the user. The sensor 11 may be a GPS sensor that measures a position of the flavor inhaler 1. The sensor 11 may be a motion sensor for detecting movement of the flavor inhaler 1. The motion sensor may be, for example, a gyro sensor for detecting an angle, a posture, or the like of the flavor inhaler 1 or may be an acceleration sensor for detecting the movement of the flavor inhaler 1 in each axial direction. The motion sensor may be a combination of the gyro sensor and the acceleration sensor.

A changing unit 12 is a block in which a predetermined change that can be observed externally occurs. The changing unit 12 may be an LED (Light Emitting Diode) that emits light of a predetermined color, such as a blue LED, and the predetermined change may be light emission of the predetermined color, such as blue. The predetermined color is not limited to blue but may be any color. The predetermined change may be a change in color of the light emission or a change in intensity of the light emission corresponding to an inhalation strength (inhalation pressure) that is detected by the sensor 11. The changing unit 12 is not restricted to the LED, but may be a light source of another structure that emits the light of the predetermined color.

Fig. 2B is a view showing an example of a schematic appearance of the flavor inhaler according to the embodiment of the present invention. An arrangement of the changing unit 12 will be described with reference to Fig. 2B. As shown in Fig. 2B, the flavor inhaler 1 is not limited to thereto, but may be in the form of a stick including two ends 161 and 162. Here, the user holds one end 161 thereof in a mouth for inhalation. Note that the user may hold the end 161 in the mouth through a cigarette mouthpiece that can be attached to the one end 161. When the flavor inhaler 1 has a shape as shown in Fig. 2B, the changing unit 12 is preferably provided at the other end 162 of the two ends. The changing unit 12 is at least one part of an outer surface of the flavor inhaler 1, and may have any shape such as a substantially rectangular shape as shown in Fig. 2B or an annular shape (not shown) along an outer periphery of the flavor inhaler 1.

Returning to Fig. 2A, a controller 13 is a block that causes the changing unit 12 to generate a predetermined change based on at least a signal from the sensor 11. For example, when a magnitude of the signal from the sensor 11 or the inhalation strength determined based on the signal is equal to or greater than a predetermined threshold, the controller 13 allows the changing unit 12 to emit the light of the predetermined color. Further, the controller 13 may change the color of the emitted light and the intensity of the emitted light in the changing unit 12 depending on, for example, the magnitude of the signal from the sensor 11 or the inhalation strength determined based on the signal. The controller 13 may increase the intensity of the light emission, for example, when the inhalation is strong, and may reduce the intensity of the light emission when the inhalation is weak. For example, the controller 13 may divide the inhalation strength into a plurality of stages, set a predetermined color for each of the plurality of stages, and emit a predetermined color corresponding to the inhalation strength. The controller 13 may be an electronic circuit module constructed as a microprocessor or a microcomputer.

A communication unit 14 performs the wireless communication with an external device including the user terminal 2 shown in Fig. 1 or another computer. For example, the communication unit 14 establishes an authentication connection (for example, corresponding to a pairing process when performing short-range wireless communication such as Bluetooth or BLE communication) that is a process of establishing a communication connection between the flavor inhaler 1 and the external device, with the external device. The authentication connection is, for example, a process required when starting communication between the flavor inhaler 1 and an external device. Encrypted communication can be performed between the flavor inhaler 1 and the external device by appropriately establishing the authentication connection. Note that the communication unit 11 may receive an authentication connection request from the external device, or may transmit the authentication connection request to the external device. The communication unit 14 may be implemented using at least a network interface or the like as a hardware resource. The controller 13 can transmit various types of information detected by the sensor 1 1 to the user terminal 2 or another computer through the communication unit 14. The various types of information which the controller 13 transmits to the user terminal 2 or another computer through the communication unit 14 contains, for example, output information for outputting a state of the flavor inhaler 1, in the user terminal 2. Further, the communication unit 14 can receive the various types of information transmitted from the user terminal 2 or another computer. The output information may be information indicating a remaining amount of a battery 110.

The flavor inhaler 1 according to the embodiment of the present invention includes a conventional tobacco. The conventional tobacco does not include the sensor 11, the controller 13, and the communication unit 14, but its combustion unit corresponds to the changing unit 12. This is because a predetermined change in color or temperature occurs in the combustion unit of the conventional tobacco based on inhalation by the user.

When the flavor inhaler 1 is the conventional tobacco (for example, cigarette), the mouthpiece (for example, cigarette mouthpiece) attached to one end of the tobacco may include all or part of functions of the sensor 11, the controller 13, and the communication unit 14 in Fig. 2A. According to this configuration, the mouthpiece can transmit various types of information such as smoking information detected by the sensor 11 to the user terminal 2 or another computer.

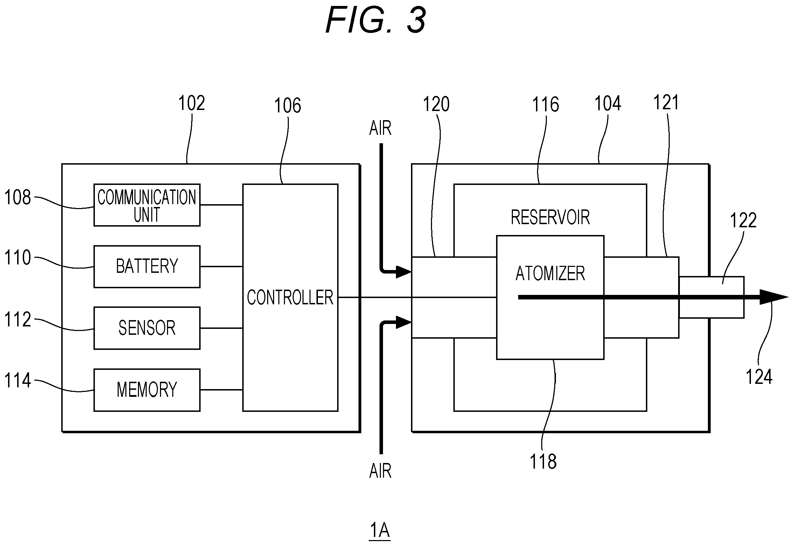

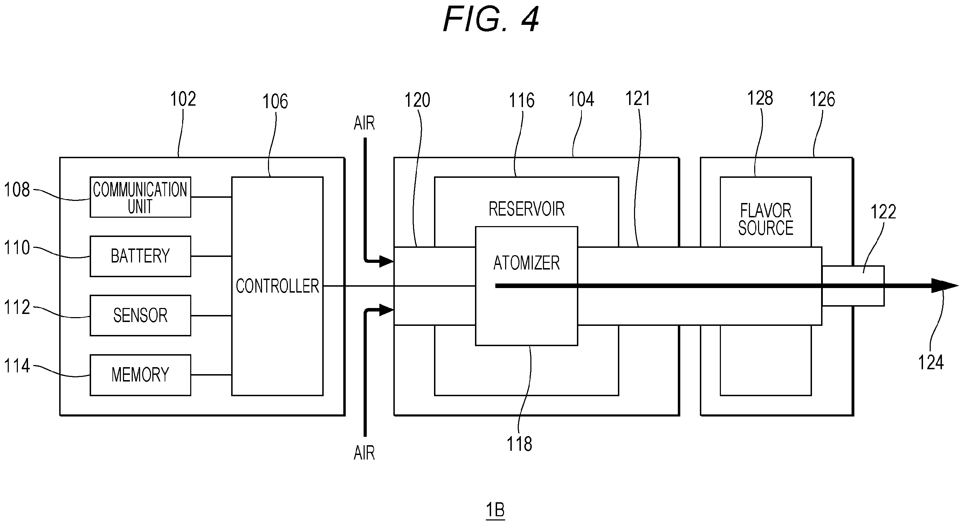

Fig. 3 is a block diagram showing a schematic configuration of the flavor inhaler according to the embodiment of the present invention. As shown in Fig. 3, a flavor inhaler 1A includes a first member 102 (battery unit) and a second member 104 (cartridge). As shown as an example, the first member 102 may include a controller 106, a communication unit 108, the battery 110, a sensor 112, and a memory 114. The controller 13 in Fig. 2A corresponds to the controller 106 in Fig. 3, the sensor 11 in Fig. 2A corresponds to the sensor 112 in Fig. 3, and the communication unit 14 in Fig. 2A corresponds to the communication unit 108 in Fig. 3. In Figs. 3 and 4, the first member 102 (battery unit) is described as a configuration of the flavor inhaler 1A, but is not limited thereto. For example, a component of the first member 102, that is, at least one component out of the controller 106, the communication unit 108, the battery 110, the sensor 112, or the memory 114 may be an external component of the flavor inhaler 1A.

As an example, the second member 104 may include a reservoir 116, an atomizer 118, an air intake channel 120, an aerosol channel 121, and a mouthpiece 122. Some components included in the first member 102 may be included in the second member 104. Some components included in the second member 104 may be included in the first member 102. The second member 104 may be attachable to and detachable from the first member 102. Or, all the components included in the first member 102 and the second member 104 may be included in the same housing instead of the first member 102 and the second member 104.

The reservoir 116 holds the aerosol source. For example, the reservoir 116 is made of a fibrous or porous material, and holds the aerosol source as the liquid in gaps between fibers or in pores of the porous material. As the fibrous or porous material described above, for example, cotton, glass fiber, or tobacco raw material can be used. The reservoir 116 may be configured as a tank that stores the liquid. The aerosol source is, for example, the liquid such as a polyhydric alcohol such as glycerin or propylene glycol, or water. When the flavor inhaler 1A is a medical inhaler such as a nebulizer, the aerosol source may also include a medicament for a patient to inhale. As another example, the aerosol source may include the tobacco raw material that releases a flavor component upon heating or an extract derived from the tobacco raw material. The reservoir 116 may have a configuration that can replenish the consumed aerosol source. Or, the reservoir 116 may be configured such that the reservoir 116 itself can be replaced when the aerosol source is consumed. Further, the aerosol source is not limited to the liquid, and may be a solid. When the aerosol source is the solid, the reservoir 116 may be, for example, a hollow container that is not made of the fibrous or porous material.

The atomizer 118 is configured to generate the aerosol by atomizing the aerosol source. When the inhalation is detected by the sensor 112, the atomizer 118 generates the aerosol. For example, a wick (not shown) may be provided to connect the reservoir 116 and the atomizer 118. In this case, a portion of the wick leads into the reservoir 116 and contacts the aerosol source. The other portion of the wick extends to the atomizer 118. The aerosol source is carried from the reservoir 116 to the atomizer 118 by capillary effect of the wick. As an example, the atomizer 118 includes a heater that is electrically connected to the battery 110. The heater is placed in contact with or in close proximity to the wick. When the inhalation is detected, the controller 106 controls the heater of the atomizer 118, to atomize the aerosol source by heating the aerosol source carried through the wick. Another example of the atomizer 118 may be an ultrasonic atomizer that atomizes the aerosol source by ultrasonic vibration. The air intake channel 120 is connected to the atomizer 118, and communicates with an outside of the flavor inhaler 1A. The aerosol generated in the atomizer 118 is mixed with air taken in through the air intake channel 120. A mixed fluid of the aerosol and the air is sent out to the aerosol channel 121 as indicated by an arrow 124. The aerosol channel 121 has a tubular structure for transporting the mixed fluid of the aerosol and the air generated in the atomizer 118 to the mouthpiece 122.

The mouthpiece 122 is located at the end of the aerosol channel 121 and is configured to open the aerosol channel 121 to the outside of the flavor inhaler 1A. The user takes in the air containing the aerosol into an oral cavity by holding and inhaling the mouthpiece 122.

The communication unit 108 communicates with the user terminal or another computer. The communication unit 108 may be implemented using at least the network interface or the like as the hardware resource.

The battery 110 supplies power to each component of the flavor inhaler 1A such as the communication unit 108, the sensor 112, the memory 114, and the atomizer 118. The battery 110 may be chargeable by connecting to an external power source through a predetermined port (not shown) of the flavor inhaler 1A. Only the battery 110 may be removable from the first member 102 or the flavor inhaler 1A, and may be replaced with a new battery 110. Or, the battery 110 may be replaceable with the new battery 110 by replacing the entire first member 102 with a new first member 102.

The sensor 112 may include the pressure sensor that detects a change in pressure in the air intake channel 120 and/or the aerosol channel 121 or the flow rate sensor that detects a flow rate. The sensor 112 may also include a weight sensor that detects a weight of the component such as the reservoir 116. The sensor 112 may also be configured to detect the puff action by the user using the flavor inhaler 1A. The sensor 112 may also be configured to integrate times of energizing the atomizer 118. The sensor 112 may also be configured to detect a level of the liquid in reservoir 116. The sensor 112 may also be configured to detect a SOC (State of Charge), an integrated current value, a voltage and the like of the battery 110. The integrated current value may be obtained by a current integration method, an SOC-OCV (Open Circuit Voltage) method, or the like. The sensor 112 may also be an operation button that can be operated by the user.

The controller 106 may be an electronic circuit module configured as a microprocessor or a microcomputer. The controller 106 may be configured to control operation of the flavor inhaler 1A according to computer-executable instructions stored in the memory 114. The memory 114 is a storage medium such as a ROM, a RAM, or a flash memory. In addition to the computer-executable instructions as described above, the memory 114 may store setting information and the like necessary to control the flavor inhaler 1A. The memory 114 stores, for example, state information on a state of the flavor inhaler 1A.

The state of the flavor inhaler 1A includes, for example, the following states (1) to (5).
(1) A state where the puff action is performed in the flavor inhaler 1A (for example, a state where the atomizer 118 is heating the heater to atomize the aerosol source, and the like)
(2) A state where the flavor inhaler 1A is used by the user (for example, a state where vibration of the flavor inhaler 1A is detected by the sensor 112)
(3) A state where the remaining amount of the battery 110 is small (for example, a state where the remaining amount of the battery is equal to or less than a predetermined value (30%), and the like)
(4) The flavor inhaler 1A is in a sleep state (for example, a state where functions of at least some of the components other than the battery 110 among the components included in the flavor inhaler 1A are stopped)
(5) A state where the battery 110 included in the flavor inhaler 1A is being charged (for example, a state where the battery 110 is being charged by connecting the flavor inhaler 1A to a charging device (not shown)).

Note that the case where the flavor inhaler 1A is set to the sleep state includes a case where the flavor inhaler 1A is manufactured and stored as a stock for a long period before being shipped, but is not limited thereto.

When the flavor inhaler 1A is in the state (1) or (2), a high load is applied to the flavor inhaler 1A, that is, power consumption of the flavor inhaler 1A is increased, and battery consumption is also increased. On the other hand, when the flavor inhaler 1A is in the state (4), the high load is not applied to the flavor inhaler 1A, that is, the power consumption of the flavor inhaler 1A is reduced, and the battery consumption is also reduced.

The state information may include, for example, at least one piece of information out of information on the puff number regarding the number of puffs and information on the remaining amount regarding the remaining amount of the battery. The remaining amount of the battery may be indicated as a percentage (%) of a total amount, or other display methods may be used. For example, the memory 114 may store various information such as a method for controlling the communication unit 108 (modes such as light emission, voice production and vibration, and the like), a value detected by the sensor 112, and a heating history of the heater by the atomizer 118. The controller 106 reads information from the memory 114 as necessary, uses it for controlling the flavor inhaler 1A, and stores the information in the memory 114 as necessary.

Fig. 4 is a block diagram showing another schematic configuration of the flavor inhaler according to the embodiment of the present invention. As shown in the drawing, a flavor inhaler 1B includes a third member 126 in addition to the configuration included in the flavor inhaler 1A of Fig. 3. The third member 126 may include a flavor source 128. As an example, when the flavor inhaler 1B is the electronic tobacco, the flavor source 128 may include the flavor component contained in the tobacco. As shown in the drawing, the aerosol channel 121 extends across the second member 104 and the third member 126. The mouthpiece 122 is included in the third member 126.

The flavor source 128 is a component for imparting flavor to the aerosol. The flavor source 128 is placed in the middle of the aerosol channel 121. A mixed fluid of the aerosol and the air generated by the atomizer 118 (hereinafter, note that the mixed fluid may be simply referred to as the aerosol) flows to the mouthpiece 122 through the aerosol channel 121. Thus, the flavor source 128 is provided downstream of the atomizer 118 with respect to an aerosol flow. In other words, the flavor source 128 is located closer to the mouthpiece 122 than the atomizer 118 in the aerosol channel 121. Therefore, the aerosol generated by the atomizer 118 reaches the mouthpiece 122 after passing through the flavor source 128. When the aerosol passes through the flavor source 128, the flavor component contained in the flavor source 128 is imparted to the aerosol. As an example, when the flavor inhaler 1B is the heated tobacco, the flavor source 128 may be derived from tobacco, such as chopped tobacco or a processed product obtained by shaping the tobacco raw material into a granular, sheet or powder form. The flavor source 128 may also be non-tobacco derived from plants (for example, mint, herbs or the like) other than tobacco. As an example, the flavor source 128 includes a tobacco component. The flavor source 128 may contain a fragrance component such as menthol. In addition to the flavor source 128, the reservoir 116 may also include a substance containing the flavor component. For example, the flavor inhaler 1B may be configured to hold a tobacco-derived flavor substance in the flavor source 128, and to include a non-tobacco-derived flavor substance in the reservoir 116.

The user can take in the air containing the flavored aerosol into the oral cavity by holding and inhaling the mouthpiece 122.

The controller 106 is configured to control the flavor inhalers 1A and 1B (hereinafter, collectively referred to as "flavor inhaler 1" in some cases) according to the embodiment of the present disclosure by various methods.

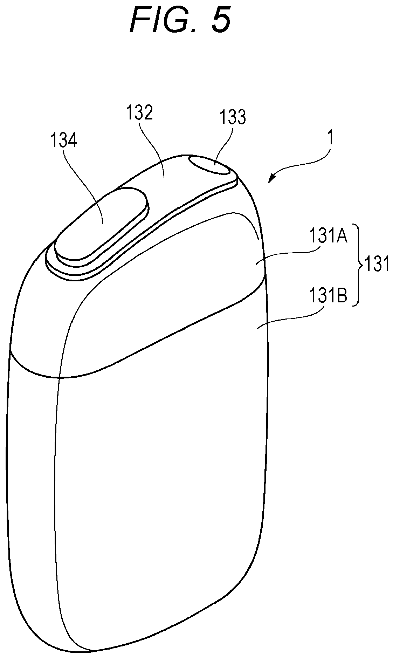

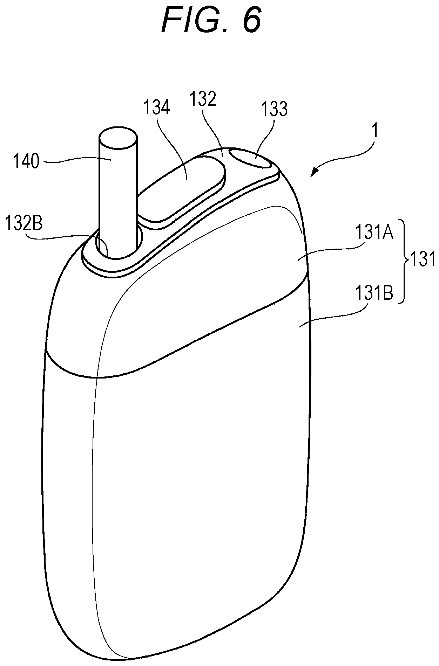

Fig. 5 is a view showing another example of the schematic appearance of the flavor inhaler according to the embodiment of the present invention. Fig. 6 is another example of the schematic appearance of the flavor inhaler holding the aerosol-generating base material according to the embodiment of the present invention. In the present embodiment, the flavor inhaler 1 is, for example, configured to heat the aerosol-generating base material such as a smoking article having a flavor-generating base material such as the aerosol source and a filling containing the flavor source, to generate the aerosol containing the flavor. Note that a smoking article 140 may be used as the aerosol-generating base material.

As will be understood by those skilled in the art, the smoking article 140 is just one example of the aerosol-generating base material. The aerosol source contained in the aerosol-generating base material may be the solid or the liquid. The aerosol source may be, for example, a polyhydric alcohol such as glycerin or propylene glycol, a liquid such as water, or a mixture thereof. The aerosol source may include the tobacco raw material that releases the flavor component upon heating or the extract derived from the tobacco raw material. When the flavor inhaler 1 is the medical inhaler such as the nebulizer, the aerosol source may include the medicament for the patient to inhale. The aerosol-generating base material may not contain the flavor source depending on application.

As shown in Figs. 5 and 6, the flavor inhaler 1 includes a top housing 131A, a bottom housing 131B, a cover 132, a switch 133, and a lid 134. The top housing 131A and the bottom housing 131B are connected to each other to constitute the outermost housing 131 of the flavor inhaler 1. The housing 131 may be sized to fit a user's hand. In this case, when the user uses the flavor inhaler 1, the user can hold the flavor inhaler 1 by hand and inhale the aerosol.

The top housing 131A has an opening (not shown), and the cover 132 is coupled to the top housing 131A so as to close the opening. As shown in Fig. 6, the cover 132 has an opening 132B into which the smoking article 140 can be inserted. The lid 134 is configured to open and close the opening 132B of the cover 132. Specifically, the lid 134 is attached to the cover 132 and is configured to be movable along a surface of the cover 132 between a first position that closes the opening 132B and a second position that opens the opening 132B.

The switch 133 is used to switch the operation of the flavor inhaler 1 on and off. For example, as shown in Fig. 6, the user can supply power from a battery (not shown) to a heating unit (not shown) by operating the switch 133 with the smoking article 140 inserted into the opening 132B, to heat the smoking article 140 without burning. When the smoking article 140 is heated, the aerosol is generated from the aerosol source included in the smoking article 140, and the flavor of the flavor source is taken into the aerosol. The user can inhale the aerosol containing the flavor by inhaling a portion (portion shown in Fig. 6) of the smoking article 140 protruding from the flavor inhaler 1. In the present specification, a direction in which the aerosol-generating base material such as the smoking article 140 is inserted into the opening 132B is referred to as a longitudinal direction of the flavor inhaler 1.

A configuration of the flavor inhaler 1 shown in Figs. 5 and 6 is merely an example of the configuration of the flavor inhaler according to the present disclosure. The flavor inhaler according to the present disclosure can be configured in various forms such that the aerosol can be generated by heating the aerosol-generating base material including the aerosol source, and the generated aerosol source can be inhaled by the user.

### [Configuration of user terminal]

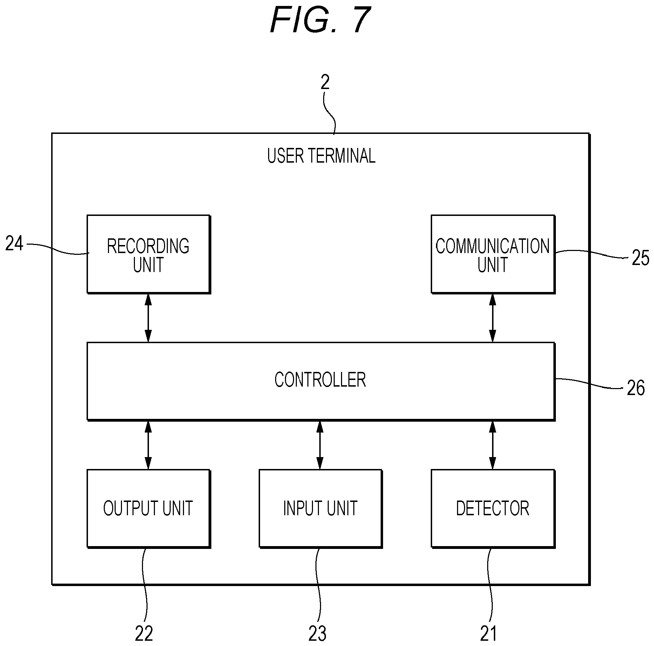

Fig. 7 is a block diagram of a schematic configuration of the user terminal according to the embodiment of the present invention. It should be noted that Fig. 7 schematically and conceptually shows each component included in the user terminal 2, and does not show the exact arrangement, shape, dimension, positional relationship, and the like of each component and the user terminal 2. It should also be noted that the user terminal 2 can include components not shown. Although an example of the user terminal 2 is one computer such as a smart phone, a tablet, and a personal computer, it is not necessarily limited to this. For example, a detector 21 to be described later may be implemented by a digital camera externally connected to the computer.

The detector 21 detects a predetermined change that occurs in at least a part of the flavor inhaler 1, for example, the changing unit 12 and can be externally observed. The detector 21 may be implemented using at least the digital camera, a temperature sensor or the like as the hardware resource.

An output unit 22 outputs a message based on the output information notified from the flavor inhaler 1 shown in Fig. 1. The output unit 22 may output a sound based on the output information notified from the flavor inhaler 1. The output unit 22 displays information indicating that the predetermined change is detected. The output unit 22 may be implemented using at least a display (including a touch panel display) or the like as the hardware resource.

An input unit 23 receives input from the user. The input unit 23 may be implemented using at least a keyboard, a mouse, the touch panel display, or the like as the hardware resource.

A recording unit 24 stores programs, information and the like. The recording unit 24 may be implemented using at least an HDD (Hard Disk Drive), an SSD (Solid State Drive), the memory or the like as the hardware resource.

A communication unit 25 communicates with another computer. The communication unit 25 may be implemented using at least the network interface or the like as the hardware resource.

A controller 26 performs various controls. The controller 26 may be configured to transmit and receive the information via the communication unit 25. The output unit 22 can output the information based on the received output information. The controller 26 may be, for example, configured to determine how the user inhales. The output unit 22 can further display a determination result. The controller 26 may be configured to allow the user to select one of a plurality of inhalation methods through the input unit 23. The output unit 22 can further display the information based on the selected inhalation method. The controller 26 may be implemented using at least a processor or the like as the hardware resource.

Note that various functions of the user terminal 2 may be implemented using an application running on the user terminal. The user terminal 2 may download the application and implement various functions by the downloaded application. Further, the user terminal 2 may download a program for implementing various functions of the user terminal 2 and execute the downloaded program, to implement various functions. Note that the user terminal 2 may implement the functions by PWA (Progressive Web Apps).

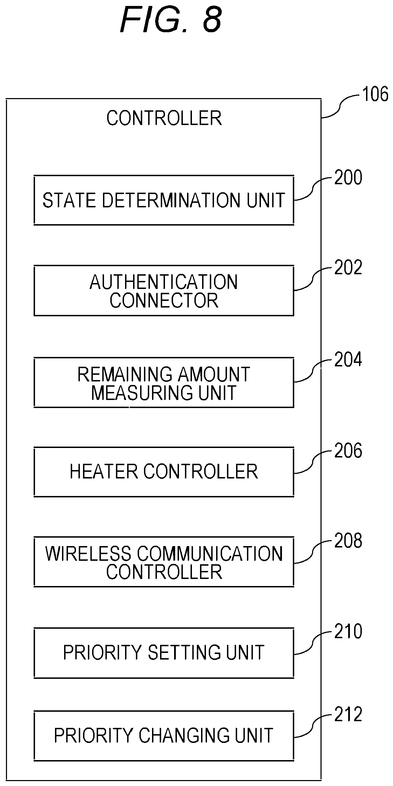

Fig. 8 is a schematic configuration diagram showing an example of a functional configuration of the controller according to the embodiment of the present invention. As shown in Fig. 8, the controller 106 functionally includes a state determination unit 200, an authentication connector 202, a remaining amount measuring unit 204, a heater controller 206, a wireless communication controller 208, a priority setting unit 210 that sets priority of a plurality of operations in the flavor inhaler, and a priority changing unit 212 that changes the set priority. Note that the controller 106 can be implemented, for example, by a CPU or the like executing the program stored in the memory 114 shown in Figs. 3 and 4. Further, the controller 106 may be implemented by downloading the program used for processing in the controller 106 and executing the downloaded program. The controller 13 shown in Fig. 2A may functionally include the state determination unit 200, the authentication connector 202, the remaining amount measuring unit 204, the heater controller 206, the wireless communication controller 208, the priority setting unit 210, and the priority changing unit 212. The authentication connector 202 may be, for example, included in the communication unit 108 shown in Figs. 3 and 4.

As an operation in the processing of each function of the controller 106, a method for operating each functional element, for example, each unit constituting the controller 106 of Fig. 8 as a process or a process group and operating an entire system so as to satisfy a time constraint condition (for example, a method represented by a real-time system) may be used.

For example, when the heater controller 206 is operated as one process group and the wireless communication controller 208 is operated as one process group, the two process groups may be requested to be operated simultaneously. Specifically, in the state where the puff action is performed in the flavor inhaler 1A, when the wireless communication controller 208 receives a response request by the wireless communication from the user terminal 2, it is necessary to determine which process is prioritized in advance. As an example of prioritization in the process, the highest priority process is a response to an abnormal state in the flavor inhaler 1A. Further continuing with the example of prioritization, for example, the priority may be set in order of a heater heating process, a process for detecting a connection state of the aerosol generating device, and a process for a communication response request from the user terminal 2. However, no matter what order a processing priority is set, it is required that the entire system can be operated to satisfy the time constraint described above. An execution time in each process may be predicted in advance so that the time constraint condition can be satisfied, and the order of the processes may be adjusted so that the time constraint can be satisfied for all the processes with the time constraint condition. With the above priority setting, a process with a higher priority may be executed with priority over a process with a lower priority. Further, even when the process with a lower priority is being executed, the process may be controlled to be interrupted by the process with a higher priority. Furthermore, the process with a higher priority may be executed exclusively against the process with a lower priority.

With a method for operating the system in this way, for example, in the state where the puff action is performed in the flavor inhaler 1A, even when the wireless communication controller 208 receives the response request from the user terminal 2 by the wireless communication, it is possible to execute each process at a predetermined priority and satisfy the time constraint condition.

The above is merely an example, and many methods are disclosed as a system operation method. Therefore, the method is not particularly limited to the above example as long as it is a method applicable to the present embodiment.

The state determination unit 200 determines whether the flavor inhaler 1 is in a predetermined state (for example, at least one of the above states (1) to (5)). The state determination unit 200 determines whether the flavor inhaler 1A is in a state where the puff action is performed based on, for example, a heating state of the heater included in the atomizer 118 shown in Figs. 3 and 4 controlled by the heater controller 206. The state determination unit 200 determines whether the flavor inhaler 1A is in the sleep state, for example, by detecting whether a function of at least some of the components other than the battery 110 among the components including the communication unit 108 and the like of the flavor inhaler 1A shown in Figs. 3 and 4 is stopped. The state determination unit 200 determines whether the flavor inhaler 1A is in a state of being used by the user based on, for example, presence or absence of vibration generated in the flavor inhaler 1A detected by the sensor 112 shown in Figs. 3 and 4. The state determination unit 200 determines whether the battery 110 is in a state of being charged, for example, by detecting whether the flavor inhaler 1A is connected to the charging device.

The authentication connector 202 establishes the "authentication connection" that is the process of establishing the communication connection between the flavor inhaler 1 and the user terminal 2. The authentication connector 202 establishes the authentication connection, for example, between the flavor inhaler 1 and the user terminal 2. When the authentication connection is established by the authentication connector 202, the flavor inhaler 1 and the user terminal 2 are in an "authentication connection state". Bluetooth communication is performed, for example, in a unit called a piconet. In the Bluetooth communication, the user terminal 2 is called "master", and the flavor inhaler 1 is called "slave". For example, seven slaves can be connected to one master. For example, the master has a communication initiative, and information transmission from the master to the slave is performed at an arbitrary timing. On the other hand, the information transmission from the slave to the master is performed based on an instruction (the authentication connection request) from the master. In the communication between the flavor inhaler 1 and the user terminal 2, the user terminal 2 does not necessarily need to have the communication initiative. For example, the flavor inhaler 1 may have the communication initiative, and the information may be transmitted from the flavor inhaler 1 to the user terminal 2 at an arbitrary timing.

When establishing encrypted communication between the master and one or more slaves, for example, shared secret information (a link key) generated using random numbers is exchanged between the master and the slave. Then, the communication between the master and each slave is encrypted based on the link key. Such a procedure of key exchange and establishment of the communication connection between the master and the slave is the "authentication connection".

After the authentication connection is completed, the master and the slave perform communication so that a timing of information transmission (TX) or a timing of information reception (RX) is synchronized.

As one of low power consumption operations, for example, a function of "transmission frequency change" is provided. The transmission frequency change is an operation to suppress the power consumption by thinning out response communication that must respond to an inquiry from the master when there is no information that the slave wants to transmit to the master.

Specifically, generally when communicating between the slave and the master, the slave needs to respond to the master at every master communication interval L set in advance. For example, when the slave does not respond to the inquiry from the master (for example, when there is no response for the number of times set in advance as the number of communication interruptions), the slave is disconnected from the communication connection by the master. However, even when there is no information (for example, updated information) to be transmitted, responding to the inquiry from the master by the slave leads to unnecessary power consumption.

Therefore, when a transmission frequency is set (or changed) to, for example, "4" in the transmission frequency change, the slave can maintain the communication connection even if the slave does not respond to the inquiry from the master up to four times. In this way, the slave can thin out the response communication and can suppress the power consumption. Even when the communication is thinned out based on the transmission frequency change, the slave performs, for example, connection maintenance communication for maintaining the communication connection with the master with minimum power consumption.

Further, in the communication according to the present invention, for example, a function called "forced transmission" is provided. The forced transmission is an operation to transmit predetermined information to be transmitted from the slave to the master to the master at a next transmission timing in a state before thinning out even when the communication is thinned out based on the transmission frequency change. For example, when the transmission frequency is set to "4" by the transmission frequency change, the response transmission is thinned out. However, by setting the forced transmission, even in a communication thinning period (that is, even when the transmission frequency change is set), the information to be transmitted to the master can be transmitted to the master at the next transmission timing in the state before thinning out. Thus, the transmission frequency change and the forced transmission in the communication according to the present invention are operations that enable efficient information transmission while being the low power consumption operation.

The remaining amount measuring unit 204 measures the remaining amount of the battery 110 that supplies power to the flavor inhaler 1A shown in Figs. 3 and 4. The remaining amount measuring unit 204 measures the remaining amount of the battery based on, for example, information such as the SOC, the integrated current value, or the voltage of the battery 110 detected by the sensor 112 shown in Figs. 3 and 4.

The heater controller 206 controls the heating state of the heater for atomizing the aerosol source. The heater controller 206 generates heat in the heater by supplying current to the heater included in the atomizer 118 shown in Figs. 3 and 4. The heater controller 206 employs, for example, PWM (Pulse Width Modulation) control. The voltage applied to the heater is increased to increase temperature of the heater, and the voltage applied to the heater is stopped to reduce the temperature of the heater.

The wireless communication controller 208 controls the wireless communication between the flavor inhaler 1 and the user terminal 2 when the flavor inhaler 1 is in the predetermined state. For example, the wireless communication controller 208 controls the wireless communication so as to restrict the communication unit 108 shown in Figs. 3 and 4 from transmitting the information to the user terminal 2. The wireless communication controller 208 controls the wireless communication so as to restrict the communication unit 108 from receiving the information from the user terminal 2. Restricting the communication unit 108 from transmitting the information to the user terminal 2 and restricting the communication unit 108 from receiving the information from the user terminal 2 include, for example, disconnection of the Bluetooth communication between the flavor inhaler 1 and the user terminal 2. Further, restricting the communication unit 108 from transmitting the information to the user terminal 2 includes, for example, reducing the transmission frequency by setting a transmission interval to the next transmission longer when the communication unit 108 transmits the information from the user terminal 2.

Further, restricting the communication unit 108 from transmitting the information to the user terminal 2 includes reducing the transmission frequency by changing transmission frequency setting. Changing the transmission frequency setting is an operation to suppress the power consumption by thinning out the response communication that must respond to the inquiry from the master even when there is no information that the slave wants to send to the master. Specifically, generally when communicating between the slave and the master, the slave needs to respond to the master at every master communication interval L set in advance. For example, when the slave does not respond to the inquiry from the master (for example, when the slave does not respond for the number of times set in advance as link loss (communication interruption)), the slave is disconnected from the communication connection by the master. However, even when there is no information (for example, updated information) to be transmitted, transmitting the information from the slave to the master leads to unnecessary power consumption. Thus, by limiting at least one of information transmission or information reception, the power consumption of the flavor inhaler 1A is reduced, and the battery consumption is also reduced. Note that, for example, in the Bluetooth communication, the information transmission consumes more power of the battery 110 as compared with information reception. Therefore, it is possible to further reduce the consumption of the battery 110 by preferentially restricting the information transmission.

For example, when the flavor inhaler 1A is in the state (1) (state where the puff action is performed in the flavor inhaler 1A) or in the state (2) (state where the flavor inhaler 1A is used by the user) is a state where the high load is applied to the flavor inhaler 1A, that is, a state where the power consumption of the flavor inhaler 1A is increased. Therefore, when the Bluetooth communication is performed between the flavor inhaler 1 and the user terminal 2 with the battery in a high load state, a load is further applied to the battery. Therefore, in order to prevent such a situation, the wireless communication controller 208 controls the wireless communication between the flavor inhaler 1 and the user terminal 2 when the flavor inhaler 1 is in the predetermined state.

For example, when the flavor inhaler 1A is in one of the states (1) and (2), the wireless communication controller 208 may control the wireless communication to restrict the communication unit 108 from transmitting the information to the user terminal 2.

The wireless communication controller 208 may control the wireless communication when the remaining amount of the battery 110 shown in Figs. 3 and 4 is less than or equal to a predetermined value (for example, 30%) (in the state (3)). The predetermined value may be set in multiple stages, and for example, a first predetermined value may be set to 30% and a second predetermined value may be set to 10%. That is, when the remaining amount of the battery 110 reaches the first predetermined value, the wireless communication controller 208 first controls the wireless communication so as to restrict the communication unit 108 from transmitting the information to the user terminal 2. Then, when the remaining amount of the battery 110 reaches the second predetermined value, the wireless communication controller 208 further controls the wireless communication so as to also restrict the communication unit 108 from receiving the information from the user terminal 2. Note that three or more values may be set as set values.

On the other hand, when the flavor inhaler 1A is in the state (4) (the flavor inhaler 1A is in the sleep state) is a state where the high load is not applied to the flavor inhaler 1A, that is, a state where the power consumption of the flavor inhaler 1A is reduced and the battery consumption is also reduced. Therefore, in such a case, the consumption of the battery 110 can be further reduced by controlling the wireless communication between the flavor inhaler 1 and the user terminal 2. For example, restriction of the wireless communication includes restricting the communication unit 108 from transmitting the information to the user terminal 2. Restricting the communication unit 108 from transmitting the information to the user terminal 2 includes, for example, at least one of setting the transmission interval to the next transmission longer or changing the transmission frequency setting when the communication unit 108 transmits the information from the user terminal 2.

When the communication unit 108 is restricted from transmitting the information to the user terminal 2, the wireless communication control unit 208 may allow to transmit the information in the state (5) where the battery 110 included in the flavor inhaler 1A is being charged. Further, when the communication unit 108 is restricted from receiving the information from the user terminal 2, the wireless communication control unit 208 may allow to receive the information when the battery 110 included in the flavor inhaler 1A is being charged. According to this configuration, in the state where the battery is being charged, the restriction on information transmission and reception can be lifted.

Control of the wireless communication is not limited to restricting the communication unit 108 from transmitting the information to the user terminal 2 or restricting the communication unit 108 from receiving the information from the user terminal 2. For example, the control of the wireless communication includes limiting transmission of at least a part of the information that can be transmitted to the user terminal 2 by the communication unit 108. The wireless communication control unit 208 may resume (establish) the authentication connection (for example, a response to the request) after heating of the heater is finished.

### [Wireless communication control process]

### <First embodiment>

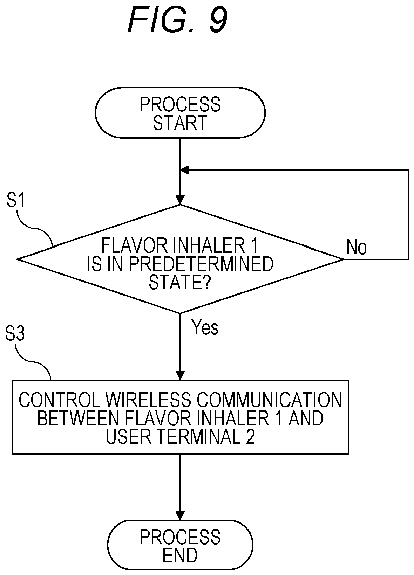

An example of a wireless communication control process according to a first embodiment of the present invention will be described with reference to Fig. 9. Fig. 9 is a flowchart showing an example of the wireless communication control process according to the first embodiment of the present invention. First, as a premise of the wireless communication control process, for example, the user activates the flavor inhaler 1 by pressing a power button (not shown) provided on the outer surface of the flavor inhaler 1. An activation process of the flavor inhaler 1 is performed similarly also in the wireless communication control process according to each embodiment described below. Note that the activation process of the flavor inhaler 1 is not limited to pressing the power button, but may be, for example, the puff action for the flavor inhaler 1 or any method as long as the flavor inhaler 1 is activated.

As shown in Fig. 9, in Step S1, the flavor inhaler 1 determines whether the flavor inhaler 1 is in the predetermined state (for example, at least one of the states (1) to (5)). For example, when the flavor inhaler 1 determines that the puff action is performed in the flavor inhaler 1 (in a case of Yes), the process proceeds to Step S3.

In Step S3, the flavor inhaler 1 controls the wireless communication between the flavor inhaler 1 and the user terminal 2. For example, the flavor inhaler 1 controls the wireless communication so as to restrict the communication unit 108 shown in Figs. 3 and 4 from transmitting the information to the user terminal 2. Further, the flavor inhaler 1 controls the wireless communication so as to allow the communication unit 108 to receive the information from the user terminal 2.

As described above, according to the first embodiment of the present invention, when the flavor inhaler 1 is in the predetermined state, the wireless communication performed between the flavor inhaler 1 and the user terminal is controlled. Thus, since an increase in the power consumption of the flavor inhaler 1 can be suppressed, it is possible to reduce the consumption of the battery 110 (see Figs. 3 and 4) included in the flavor inhaler 1. For example, when the flavor inhaler 1 is in the state (4), that is, when the flavor inhaler 1 is in the sleep state, it is possible to reduce frequency of the wireless communication between the flavor inhaler 1 and the user terminal 2. Thus, the battery consumption can be further reduced by restricting transmission from the flavor inhaler 1. Further, since the wireless communication is controlled when the puff action is performed in the flavor inhaler 1, it is possible to reduce a battery load due to a large current generated during heating of the heater.

### <Second embodiment>

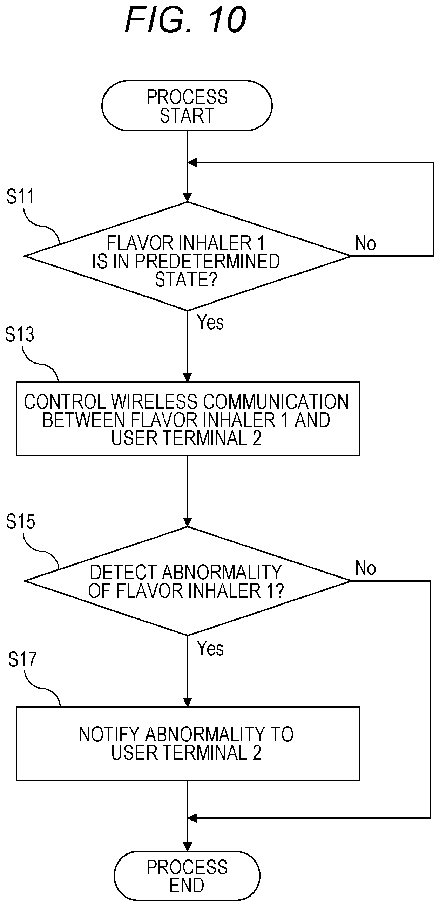

A second embodiment shows the wireless communication control process when abnormality of the flavor inhaler 1 is detected. Fig. 10 is a flowchart showing an example of the wireless communication control process according to the second embodiment of the present invention. As shown in Fig. 10, in Step S11, the flavor inhaler 1 determines whether the flavor inhaler 1 is in the predetermined state (for example, at least one of the states (1) to (5)). For example, when it is determined that the flavor inhaler 1A is used by the user by detecting the vibration of the flavor inhaler 1A by the sensor 112 shown in Figs. 3 and 4 (in the case of Yes), the process proceeds to Step S13. In Step S13, the flavor inhaler 1 controls the wireless communication between the flavor inhaler 1 and the user terminal 2. For example, the flavor inhaler 1 controls the wireless communication so as to restrict the communication unit 108 shown in Figs. 3 and 4 from transmitting the information to the user terminal 2. Further, the flavor inhaler 1 controls the wireless communication so as to allow the communication unit 108 to receive the information from the user terminal 2.

In Step S15, when the flavor inhaler 1 detects the abnormality of the flavor inhaler 1, the process proceeds to Step S17. On the other hand, when the flavor inhaler 1 does not detect the abnormality of the flavor inhaler 1, the process is ended. "Content of abnormality" includes, for example, abnormal heat generation of the battery 110 in which heat generation of the battery 110 is higher than or equal to the set value, the abnormality in a state of charge of the battery 110, abnormal heat generation in the heater in which heat generation of the heater of the atomizer 118 is higher than or equal to the set value, or a dry puff state in which heating of the heater of the atomizer 118 is continuously performed even after the liquid disappears. Detecting the abnormality includes detecting occurrence of the abnormality, detecting possibility of the occurrence of the abnormality, or the like. Detecting the possibility of the occurrence of the abnormality includes, for example, detecting the possibility of the occurrence of the abnormality in the battery 110 when the heat generation of the battery 110 is less than the set value but temperature of the battery 110 has changed abruptly.

In Step S17, the flavor inhaler 1 controls the wireless communication so as to allow the communication unit 108 shown in Figs. 3 and 4 to transmit information on the abnormality to the user terminal 2. For example, as one of control functions of the wireless communication, a function that allows the information to be transmitted even during a period in which the transmission frequency is thinned, that is, a so-called forced transmission function, may be used. For example, the flavor inhaler 1 notifies the user terminal 2 of at least one of the presence or absence of the abnormality or the content of the abnormality. For example, the user terminal 2 outputs the information on the abnormality of the flavor inhaler as text information to the output unit 22 shown in Fig. 7. For example, the output unit 22 of the user terminal 2 may output the content of the abnormality of the flavor inhaler 1 to the user by voice information, moving image information, image information, or the like instead of the text information or together with the text information. A means or method by which the user terminal 2 outputs the content of the abnormality of the flavor inhaler 1 is not limited to these examples, but the content of the abnormality of the flavor inhaler 1 may be output by any means or method as long as the user can easily recognize at least one of the presence or absence of the abnormality of the flavor inhaler 1 or the content of the abnormality.

As described above, according to the second embodiment of the present invention, when the abnormality occurs in the flavor inhaler 1, the wireless communication is controlled such that the flavor inhaler 1 is allowed to transmit the information on the abnormality of the flavor inhaler 1 to the user terminal 2. Therefore, even when the wireless communication between the flavor inhaler 1 and the user terminal 2 is restricted, the abnormality of the flavor inhaler 1 can be notified to the user. Therefore, the user can be made to quickly grasp the abnormality of the flavor inhaler 1.

### <Third embodiment>

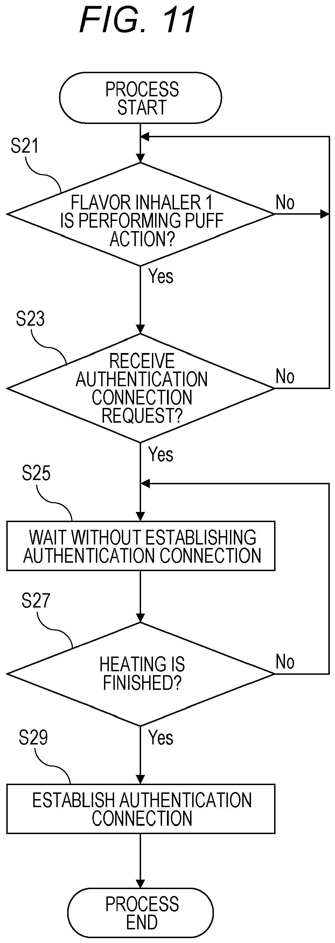

A third embodiment shows the wireless communication control process in which when the flavor inhaler 1 is in the predetermined state, the flavor inhaler 1 waits without responding to the authentication connection request from the user terminal 2 and then establishes the authentication connection. Hereinafter, a case where the flavor inhaler 1 is performing the puff action (when the heater of the atomizer 118 shown in Figs. 3 and 4 is in the heating state) will be described as an example, however, the present invention is not limited thereto. Fig. 11 is a flowchart showing an example of the wireless communication control process according to the third embodiment of the present invention. As shown in Fig. 11, in Step S21, when the flavor inhaler 1 shown in Fig. 1 detects, for example, the puff action by the user using the flavor inhaler 1 (in the case of Yes), the process proceeds to Step S23. In a case of No, it waits until detecting the puff action.

In Step S23, the flavor inhaler 1 controls the wireless communication with the user terminal 2 shown in Fig. 1. If the information from the user terminal 2 received by the flavor inhaler 1 is the authentication connection request (in the case of Yes), the process proceeds to Step S25. In the case of No, the process returns to Step S21. In Step S25, the flavor inhaler 1 controls the wireless communication between the flavor inhaler 1 and the user terminal 2 so as not to establish the authentication connection. Specifically, the flavor inhaler 1 waits without responding to the authentication connection request from the user terminal 2. Awaiting period of the flavor inhaler 1 is not particularly limited, but is, for example, several seconds.

In Step S27, the flavor inhaler 1 determines whether heating of the heater based on the puff action has been finished. When it is determined that heating of the heater has been finished (in the case of Yes), the process proceeds to Step S29. When it is determined that heating of the heater has not been finished (in the case of No), the process returns to Step S25, and the authentication connection is continued to be stopped.

In Step S29, the flavor inhaler 1 controls the wireless communication with the user terminal 2 so as to resume the authentication connection. That is, the flavor inhaler 1 establishes the authentication connection in response to the authentication connection request from the user terminal 2.

The establishment of the authentication connection is not limited to the above. For example, after the flavor inhaler 1 has stopped the authentication connection in Step S25 (for example, after it has suspended the authentication connection between the flavor inhaler 1 and the user terminal 2), and a predetermined time (for example, 1 minute) has elapsed, the flavor inhaler 1 may control the wireless communication so as to automatically resume the authentication connection. According to this configuration, after the wireless communication between the flavor inhaler 1 and the user terminal 2 is stopped, and the predetermined time elapses, it is considered that the puff action has stopped, and the authentication connection is automatically established. Therefore, since the user can establish the authentication connection without operating the flavor inhaler 1, convenience for the user is improved.

When the first member 102 (battery unit) shown in Figs. 3 and 4 and the second member 104 (cartridge) including the atomizer 118 for atomizing the aerosol source were connected, the authentication connection that has been stopped may be established. Further, when the battery 110 of the flavor inhaler 1 shown in Figs. 3 and 4 is in a charged state, the authentication connection that has been stopped may be established.

In the third embodiment, the flavor inhaler 1 may change a setting content related to the communication between the flavor inhaler 1 and the user terminal 2 as the control of the communication. For example, the flavor inhaler 1 may change the transmission frequency of the flavor inhaler 1 in response to the inquiry from the user terminal 2 in the transmission frequency change. Further, for example, the flavor inhaler may change the communication frequency between the user terminal 2 and the flavor inhaler 1 in the transmission frequency change. Therefore, when considered per unit time, since the transmission and reception of the information between the flavor inhaler 1 and the user terminal 2 is thinned out, the power consumption related to the communication in the flavor inhaler 1 can be reduced. Therefore, the power consumption of the battery 110 of the flavor inhaler 1 is reduced.

As described above, according to the third embodiment of the present invention, when the flavor inhaler 1 is in the predetermined state, after waiting for the authentication connection based on the authentication connection request from the user terminal 2, when the flavor inhaler 1 is released from the predetermined state, the authentication connection is established. For example, while the user is performing the puff action using the flavor inhaler 1, the authentication connection between the flavor inhaler 1 and the user terminal 2 is controlled not to be established. Therefore, since heating of the heater and the authentication connection are exclusively controlled, the current load is distributed. Thus, it is possible to reduce the battery load due to the large current generated during heating of the heater. Further, for example, even if the abnormality such as overheating of the heater occurs, it is possible to prevent the authentication connection from being forcibly terminated at an unexpected timing.

### <Fourth embodiment>

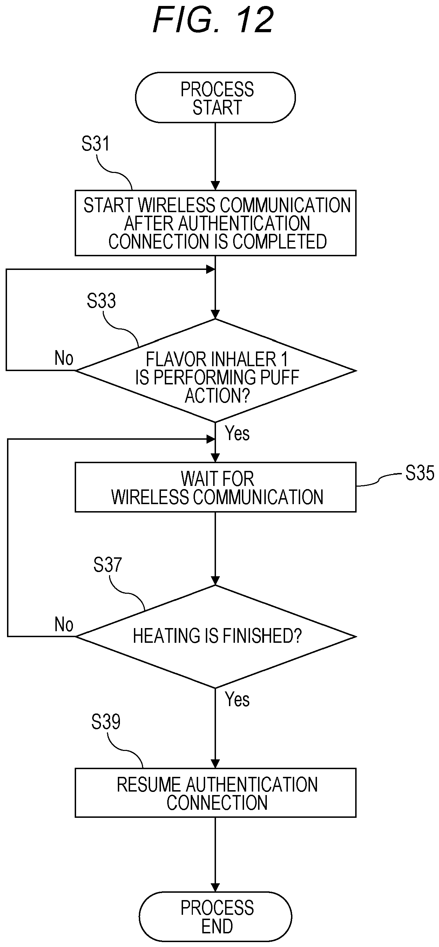

A fourth embodiment shows the wireless communication control process when waiting the wireless communication between the flavor inhaler 1 and the user terminal 2 after the authentication connection is completed, and resuming the wireless communication between the flavor inhaler 1 and the user terminal 2. Fig. 12 is a flowchart showing an example of the wireless communication control process according to the fourth embodiment of the present invention. As shown in Fig. 12, in Step S31, the flavor inhaler 1 starts the communication with the user terminal 2, for example, after the authentication connection in the Bluetooth wireless communication is completed. In Step S33, for example, when the flavor inhaler 1 detects the puff action by the user using the flavor inhaler 1 (in the case of Yes), the process proceeds to Step S3 5. In the case of No, it waits until detecting the puff action. In Step S35, the flavor inhaler 1 waits for the Bluetooth wireless communication with the user terminal 2 shown in Fig. 1.

In Step S37, the flavor inhaler 1 determines whether heating of the heater based on the puff action has been finished. When it is determined that heating of the heater has been finished (in the case of Yes), the process proceeds to Step S39. When it is determined that heating of the heater has not been finished (in the case of No), the process returns to Step S35 and the Bluetooth wireless communication is continued to be stopped.

In Step S39, the flavor inhaler 1 controls the wireless communication with the user terminal 2 so as to resume (perform) the Bluetooth wireless communication. In Step S31, since the authentication connection between the flavor inhaler 1 and the user terminal 2 has already been completed, when resuming the Bluetooth wireless communication, it is possible to resume the Bluetooth wireless communication between the flavor inhaler 1 and the user terminal 2 without establishing the authentication connection again.

Resuming of the Bluetooth wireless communication is not limited to the above. For example, the flavor inhaler 1 may control the wireless communication so that the Bluetooth wireless communication is automatically resumed after a predetermined time (for example, 3 minutes) has elapsed after waiting for the Bluetooth wireless communication in Step S35. For example, the predetermined time can be set by setting the transmission interval of the Bluetooth wireless communication described above. Further, the information transmission may be performed after heating of the heater is finished, by the forced transmission function. According to this configuration, after waiting for wireless communication between the flavor inhaler 1 and the user terminal 2 and the predetermined time elapses, it is considered that the puff action has stopped, and the Bluetooth wireless communication is automatically resumed. Therefore, since the user can resume the Bluetooth wireless communication without operating the flavor inhaler 1, the convenience for the user is improved.

In the present embodiment, detection of the puff action for the flavor inhaler 1 is described as an example of a condition for shifting to a waiting state for the Bluetooth wireless communication, however, the present embodiment is not limited to this mode. For example, the second member 104 (cartridge) including the atomizer 118 that atomizes the aerosol source shown in Figs. 3 and 4 may wait for the wireless communication under a condition that it is removed from the first member 102 (battery unit). In this case, the waiting state for the wireless communication may shift to a stopped state according to a time required for the user to reconnect the second member 104 to the first member 102. Further, the wireless communication may be resumed by reconnection of the second member 104 to the first member 102. Furthermore, a shifting process of a state of the wireless communication may be performed based on the state of charge of the first member 102 shown in Figs. 3 and 4. For example, when the first member 102 is in the charged state, the waiting state for the wireless communication may shift to the wireless communication resuming state.

As described above, according to the fourth embodiment of the present invention, in the wireless communication after the authentication connection is completed, when the flavor inhaler 1 is in the predetermined state, it waits for the wireless communication between the flavor inhaler 1 and the user terminal 2. Thereafter, when the flavor inhaler 1 is released from the predetermined state, the wireless communication between the flavor inhaler 1 and the user terminal 2 is resumed. Therefore, since heating of the heater and the authentication connection are exclusively controlled, the current load is distributed. Thus, it is possible to reduce the battery load due to the large current generated during heating of the heater. Further, for example, even if the abnormality such as overheating of the heater occurs, it is possible to prevent the wireless communication from being forcibly terminated at an unexpected timing.

### <Fifth embodiment>

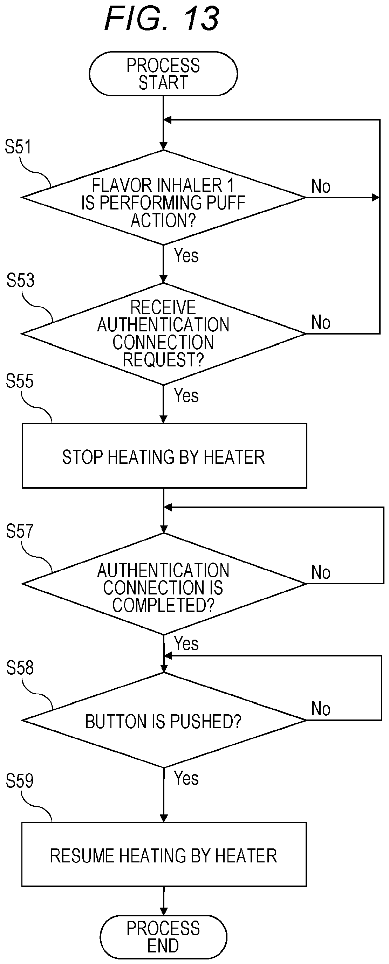

In a fifth embodiment, when the flavor inhaler 1 is in the predetermined state, heating of the heater is stopped until the authentication connection is completed upon reception of the authentication connection request. Hereinafter, the case where the flavor inhaler 1 is performing the puff action is described as an example, however, the present embodiment is not limited to this. Fig. 13 is a flowchart showing an example of the wireless communication control process according to the fifth embodiment of the present invention. As shown in Fig. 13, in Step S51, when the flavor inhaler 1 shown in Fig. 1 detects, for example, the puff action by the user using the flavor inhaler 1 (in the case of Yes), the process proceeds to Step S53. In the case of No, it waits until detecting the puff action.

In Step S53, the flavor inhaler 1 controls the wireless communication with the user terminal 2 shown in Fig. 1. If the information from the user terminal 2 received by the flavor inhaler 1 is the authentication connection request (in the case of Yes), the process proceeds to Step S55. In the case of No, the process returns to Step S51.

In Step S55, the flavor inhaler 1 stops heating of the heater of the atomizer 118. In Step S57, the flavor inhaler 1 establishes the authentication connection in response to the authentication connection request from the user terminal 2. When the authentication connection is completed (in the case of Yes), the process proceeds to Step S58. In the case of No, heating of the heater is continued to be stopped until the authentication connection is completed.

In Step S58, if a button (not shown) provided on the flavor inhaler 1 for performing (resuming) heating of the heater is pressed by the user (in the case of Yes), the process proceeds to Step S59. On the other hand, if the button is not pressed (in the case of No), heating of the heater is continued to be stopped until the button is pressed. In Step S59, the flavor inhaler 1 resumes heating of the heater of the atomizer 118. That is, the flavor inhaler 1 resumes the puff action by the user.

As described above, according to the fifth embodiment of the present invention, when the flavor inhaler 1 is performing the puff action, and it receives the authentication connection request from the user terminal 2, the flavor inhaler 1 stops heating of the heater until the authentication connection is completed. Therefore, since heating of the heater and the authentication connection are exclusively controlled, the current load is distributed. Thus, for example, even if the abnormality such as overheating of the heater occurs, it is possible to prevent the authentication connection from being forcibly terminated at an unexpected timing. Further, it is possible to reduce the battery load due to the large current generated during heating of the heater.

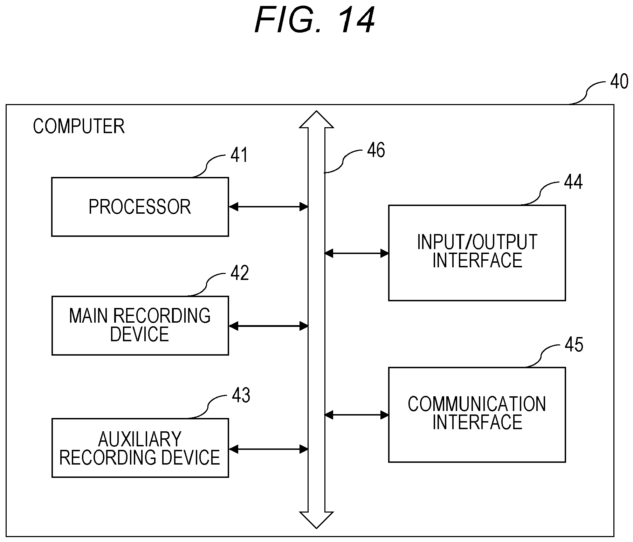

Fig. 14 is a diagram showing an example of a hardware configuration of the computer according to the embodiment of the present invention. An example of the hardware configuration of the computer that can be used to configure the user terminal 2 shown in Fig. 1 will be described with reference to Fig. 14.

As shown in Fig. 14, the computer 40 mainly includes as hardware resources a processor 41, a main recording device 42, an auxiliary recording device 43, an input/output interface 44, and a communication interface 45. These are connected to each other via a bus line 46 including an address bus, an information bus, a control bus, and the like. In some cases, an interface circuit (not shown) may be appropriately interposed between the bus line 46 and each hardware resource.

The processor 41 controls an entire computer. The main recording device 42 provides a work area to the processor 41 and is a volatile memory such as an SRAM (Static Random Access Memory) or a DRAM (Dynamic Random Access Memory). The auxiliary recording device 43 is a nonvolatile memory such as an HDD, an SSD, or a flash memory that stores the program as software, information and the like. The program, information, and the like are loaded from the auxiliary recording device 43 to the main recording device 42 through the bus line 46 at an arbitrary time.

The input/output interface 44 performs one or both of presenting information and receiving information, and is a digital camera, a keyboard, a mouse, a display, a touch panel display, a microphone, a speaker, a temperature sensor, or the like.

It will be apparent to those skilled in the art that the computer 40 can function as a desired means, execute a desired step, and realize a desired function by cooperation of the hardware resources and software exemplified above.

Each of the above embodiments is for facilitating understanding of the present invention, and is not interpreted to limit the present invention.

### LIST OF REFERENCE NUMERALS

1, 1A, 1B: flavor inhaler, 2: user terminal, 11: sensor, 12: changing unit, 13: controller, 14: communication unit, 21: detector, 22: output unit, 23: input unit, 24: recording unit, 25: communication unit, 26: controller, 31: information processor, 33: recording unit, 100: information processing system, 102: first member, 104: second member, 106: controller, 108: communication unit, 110: battery, 112: sensor, 114: memory, 116: reservoir, 118: atomizer, 120: air intake channel, 121: aerosol channel, 122: mouthpiece, 126: third member, 128: flavor source, 131: housing, 131A: top housing, 131B: bottom housing, 132: cover, 132B: opening, 133: switch, 134: lid, 140: smoking article, 161, 162: end, 200: state determination unit, 202: authentication connector, 204: remaining amount measuring unit, 206: heater controller, 208: wireless communication controller, 210: priority setting unit, 212: priority changing unit.

## Claims

1. A battery unit (102) for an aerosol generating device (1) that generates an aerosol, comprising:
a communication unit (14) that performs wireless communication between the aerosol generating device (1) and a user terminal (2); and
a wireless communication controller (208) **characterised in that** the wireless communication controller (208) allows the communication unit (14) to receive from the user terminal (2) an authentication connection request that is a process of establishing a communication connection between the aerosol generating device (1) and the user terminal (2), and
restricts the communication unit (14) from transmitting a response of the authentication connection request to the user terminal (2) when the aerosol generating device (1) is in a predetermined state.

2. The battery unit (102) according to claim 1, further comprising a battery (110) that supplies power to the aerosol generating device (1), wherein
when the communication unit (14) is restricted from transmitting the response to the user terminal (2) and the battery (110) is in a charged state, the wireless communication controller (208) allows the response to be transmitted.

3. The battery unit (102) according to claim 1, wherein the wireless communication controller (208) automatically resumes the wireless communication when the wireless communication performed between the communication unit (14) and the user terminal (2) is stopped after the authentication connection is completed.

4. The battery unit (102) according to claim 1, wherein when the wireless communication performed between the communication unit (14) and the user terminal (2) is stopped after the authentication connection is completed, the wireless communication controller (208) establishes the authentication connection when the battery unit (102) and a cartridge (104) including a atomizer (118) for atomizing the aerosol source are connected or when heating of the heater is finished.

5. The battery unit (102) according to claim 1, further comprising a heater controller (206) that controls a heating state of a heater for atomizing an aerosol source, wherein
when the heater is in the heating state, the heater controller (206) stops heating of the heater until the authentication connection is completed when an authentication connection request is received.

6. The battery unit (102) according to claim 1, wherein
when the communication unit (14) receives predetermined information from the user terminal (2), the wireless communication controller (208) controls the wireless communication so as to respond to the predetermined information when heating of the heater is finished.

7. The battery unit (102) according to claim 1, wherein when abnormality occurs in the aerosol generating device (1), the wireless communication controller (208) controls the wireless communication so as to allow the communication unit (14) to transmit information on the abnormality to the user terminal (2).

8. The battery unit (102) according to claim 1, further comprising a battery (110) that supplies power to the aerosol generating device (1), wherein
the wireless communication controller (208) controls the wireless communication when a remaining amount of the battery (110) is a predetermined value or less.

9. The battery unit (102) according to claim 1, comprising:
a priority setting unit (210) that sets priorities of a plurality of operations in the aerosol generating device (1), including at least the wireless communication; and
a priority changing unit (212) that changes the set priorities of the plurality of operations based on the predetermined state.

10. The battery unit (102) according to claim 1, wherein the wireless communication controller (208) controls the communication unit (14) to transmit information to the user terminal (2) after a predetermined time.

## Patentansprüche

1. Batterieeinheit (102) für eine Aerosolerzeugungsvorrichtung (1), die ein Aerosol erzeugt, umfassend:
eine Kommunikationseinheit (14), die eine drahtlose Kommunikation zwischen der Aerosolerzeugungsvorrichtung (1) und einem Benutzerendgerät (2) durchführt; und
eine drahtlose Kommunikationssteuereinheit (208) **dadurch gekennzeichnet, dass** die drahtlose Kommunikationssteuereinheit (208)
der Kommunikationseinheit (14) ermöglicht, vom Benutzerendgerät (2) eine Authentifizierungsverbindungsanfrage zu empfangen, die ein Verfahren zum Herstellen einer Kommunikationsverbindung zwischen der Aerosolerzeugungsvorrichtung (1) und dem Benutzerendgerät (2) ist, und
die Kommunikationseinheit (14) daran hindert, eine Antwort der Authentifizierungsverbindungsanfrage an das Benutzerendgerät (2) zu senden, wenn sich die Aerosolerzeugungsvorrichtung (1) in einem vorbestimmten Zustand befindet.

2. Batterieeinheit (102) nach Anspruch 1, weiter umfassend eine Batterie (110), die die Aerosolerzeugungsvorrichtung (1) mit Strom versorgt, wobei
wenn die Kommunikationseinheit (14) daran gehindert wird, die Antwort an das Benutzerendgerät (2) zu senden, und sich die Batterie (110) in einem geladenen Zustand befindet, die drahtlose Kommunikationssteuereinheit (208) ein Senden der Antwort ermöglicht.

3. Batterieeinheit (102) nach Anspruch 1, wobei die drahtlose Kommunikationssteuereinheit (208) die drahtlose Kommunikation automatisch wiederaufnimmt, wenn die zwischen der Kommunikationseinheit (14) und dem Benutzerendgerät (2) durchgeführte drahtlose Kommunikation nach Abschluss der Authentifizierungsverbindung gestoppt wird.

4. Batterieeinheit (102) nach Anspruch 1, wobei, wenn die zwischen der Kommunikationseinheit (14) und dem Benutzerendgerät (2) durchgeführte drahtlose Kommunikation nach Abschluss der Authentifizierungsverbindung gestoppt wird, die drahtlose Kommunikationssteuereinheit (208) die Authentifizierungsverbindung herstellt, wenn die Batterieeinheit (102) und eine Kartusche (104) einschließlich eines Zerstäubers (118) zum Zerstäuben der Aerosolquelle verbunden werden oder wenn ein Erhitzen des Heizelements beendet ist.

5. Batterieeinheit (102) nach Anspruch 1, weiter umfassend eine Heizelementsteuereinheit (206), die einen Heizzustand eines Heizelements zum Zerstäuben einer Aerosolquelle steuert, wobei
wenn sich das Heizelement im Heizzustand befindet, die Heizelementsteuereinheit (206) ein Erhitzen des Heizelements stoppt, bis die Authentifizierungsverbindung abgeschlossen ist, wenn eine Authentifizierungsverbindungsanfrage empfangen wird.

6. Batterieeinheit (102) nach Anspruch 1, wobei
wenn die Kommunikationseinheit (14) vorbestimmte Informationen vom Benutzerendgerät (2) empfängt, die drahtlose Kommunikationssteuereinheit (208) die drahtlose Kommunikation steuert, um auf die vorbestimmten Informationen zu reagieren, wenn ein Erhitzen des Heizelements beendet ist.

7. Batterieeinheit (102) nach Anspruch 1, wobei
wenn in der Aerosolerzeugungsvorrichtung (1) eine Anomalie auftritt, die drahtlose Kommunikationssteuereinheit (208) die drahtlose Kommunikation steuert, um es der Kommunikationseinheit (14) zu ermöglichen, Informationen über die Anomalie an das Benutzerendgerät (2) zu senden.

8. Batterieeinheit (102) nach Anspruch 1, weiter umfassend eine Batterie (110), die die Aerosolerzeugungsvorrichtung (1) mit Strom versorgt, wobei
die drahtlose Kommunikationssteuereinheit (208) die drahtlose Kommunikation steuert, wenn eine verbleibende Menge der Batterie (110) einen vorbestimmten Wert oder weniger beträgt.

9. Batterieeinheit (102) nach Anspruch 1, umfassend:
eine Prioritätseinstelleinheit (210), die Prioritäten einer Vielzahl von Vorgängen in der Aerosolerzeugungsvorrichtung (1) einstellt, einschließlich zumindest der drahtlosen Kommunikation; und
eine Prioritätsänderungseinheit (212), die die eingestellten Prioritäten der Vielzahl von Vorgängen basierend auf dem vorbestimmten Zustand ändert.

10. Batterieeinheit (102) nach Anspruch 1, wobei die drahtlose Kommunikationssteuereinheit (208) die Kommunikationseinheit (14) steuert, um nach einer vorbestimmten Zeit Informationen an das Benutzerendgerät (2) zu senden.

## Revendications

1. Unité de batterie (102) pour un dispositif de génération d'aérosol (1) qui génère un aérosol, comprenant :
une unité de communication (14) qui réalise une communication sans fil entre le dispositif de génération d'aérosol (1) et un terminal utilisateur (2) ; et
une unité de commande de communication sans fil (208) **caractérisé en ce que** l'unité de commande de communication sans fil (208)
permet à l'unité de communication (14) de recevoir à partir du terminal utilisateur (2) une demande de connexion d'authentification qui est un processus d'établissement d'une connexion de communication entre le dispositif de génération d'aérosol (1) et le terminal utilisateur (2), et
empêche l'unité de communication (14) de transmettre une réponse de la demande de connexion d'authentification au terminal utilisateur (2) lorsque le dispositif de génération d'aérosol (1) est dans un état prédéterminé.

2. Unité de batterie (102) selon la revendication 1, comprenant en outre une batterie (110) qui fournit de l'énergie au dispositif de génération d'aérosol (1), dans laquelle
lorsque l'unité de communication (14) est empêchée de transmettre la réponse au terminal utilisateur (2) et que la batterie (110) est dans un état chargé, l'unité de commande de communication sans fil (208) permet à la réponse d'être transmise.

3. Unité de batterie (102) selon la revendication 1, dans laquelle l'unité de commande de communication sans fil (208) reprend automatiquement la communication sans fil lorsque la communication sans fil réalisée entre l'unité de communication (14) et le terminal utilisateur (2) est arrêtée une fois la connexion d'authentification terminée.

4. Unité de batterie (102) selon la revendication 1, dans laquelle lorsque la communication sans fil réalisée entre l'unité de communication (14) et le terminal utilisateur (2) est arrêtée une fois la connexion d'authentification terminée, l'unité de commande de communication sans fil (208) établit la connexion d'authentification lorsque l'unité de batterie (102) et une cartouche (104) incluant un atomiseur (118) pour atomiser la source d'aérosol sont connectées ou lorsque le chauffage de l'élément chauffant est terminé.

5. Unité de batterie (102) selon la revendication 1, comprenant en outre une unité de commande de chauffage (206) qui commande un état de chauffage d'un élément chauffant pour atomiser une source d'aérosol, dans laquelle
lorsque l'élément chauffant est dans l'état de chauffage, l'unité de commande de chauffage (206) arrête le chauffage de l'élément chauffant jusqu'à ce que la connexion d'authentification soit terminée lorsqu'une demande de connexion d'authentification est reçue.

6. Unité de batterie (102) selon la revendication 1, dans laquelle
lorsque l'unité de communication (14) reçoit des informations prédéterminées à partir du terminal utilisateur (2), l'unité de commande de communication sans fil (208) commande la communication sans fil de manière à répondre aux informations prédéterminées lorsque le chauffage de l'élément chauffant est terminé.

7. Unité de batterie (102) selon la revendication 1, dans laquelle
lorsqu'une anomalie se produit dans le dispositif de génération d'aérosol (1), l'unité de commande de communication sans fil (208) commande la communication sans fil de manière à permettre à l'unité de communication (14) de transmettre des informations sur l'anomalie au terminal utilisateur (2).

8. Unité de batterie (102) selon la revendication 1, comprenant en outre une batterie (110) qui fournit de l'énergie au dispositif de génération d'aérosol (1), dans laquelle
l'unité de commande de communication sans fil (208) commande la communication sans fil lorsqu'une quantité restante de la batterie (110) est une valeur prédéterminée ou moins.

9. Unité de batterie (102) selon la revendication 1, comprenant :
une unité de définition de priorités (210) qui définit des priorités d'une pluralité d'opérations dans le dispositif de génération d'aérosol (1), incluant au moins la communication sans fil ; et
une unité de changement de priorités (212) qui modifie les priorités définies de la pluralité d'opérations sur la base de l'état prédéterminé.

10. Unité de batterie (102) selon la revendication 1, dans laquelle l'unité de commande de communication sans fil (208) commande l'unité de communication (14) pour transmettre des informations au terminal utilisateur (2) après un temps prédéterminé.
